# EUROPÄISCHE PATENTANMELDUNG

(11) **EP 1 247 691 A1**
(43) Veröffentlichungstag der Anmeldung: **09.10.2002**
(21) Anmeldenummer: 01108536.2
(22) Anmeldetag: 04.04.2001
(51) Int. Cl.: B60Q 3/02, B60R 1/12

(54) **Leuchtenanordnung in einem Kraftfahrzeug**

(71) Anmelder: SIDLER GMBH & CO, D-72072 Tübingen (DE)
(72) Erfinder: Biering, Frank, 72116 Mössingen (DE)
(74) Vertreter: KOHLER SCHMID + PARTNER

(57) **Zusammenfassung**

Bei einer Leuchtenanordnung (1) für den Fahrer und/oder Beifahrer eines Kraftfahrzeugs ist die mindestens eine Leuchte (5) hinter dem Rückspiegelgehäuse (3) des Rückspiegels (2) des Fahrers so angeordnet, daß ihre Lichtaustrittsfläche durch das Rückspiegelgehäuse (3) zumindest teilweise für den Fahrer und/oder Beifahrer verdeckt ist.

## Beschreibung

Die Erfindung betrifft eine Leuchtenanordnung für den Fahrer und/oder Beifahrer eines Kraftfahrzeugs mit mindestens einer Leuchte sowie auch einen Rückspiegel für ein Kraftfahrzeug mit einem Befestigungsfuß.

Leuchten für Fahrer und Beifahrer in Kraftfahrzeugen werden meist mittig im Dachhimmel plaziert und sind entweder separat aufgebaut oder mit anderen Elementen in einer sogenannten Dachkonsole integriert. Allerdings haben solche im Dachhimmel angeordneten Leuchten meist den Nachteil, daß sowohl die Fahrzeuginsassen also auch der Fahrer selbst durch diese Leuchten mehr oder weniger stark geblendet werden, da ein direkter Blick auf die Lichtaustrittsfläche der Leuchte möglich ist.

Es ist daher die Aufgabe der Erfindung, eine Leuchtenanordnung der eingangs genannten Art derart zu verbessern, daß der Fahrer und/oder der Beifahrer durch die Leuchte möglichst wenig geblendet werden.

Diese Aufgabe wird erfindungsgemäß dadurch gelöst, daß die mindestens eine Leuchte hinter dem Rückspiegelgehäuse des Rückspiegels des Fahrers angeordnet ist und ihre Lichtaustrittsfläche durch das Rückspiegelgehäuse zumindest teilweise für den Fahrer und/oder Beifahrer verdeckt ist. Vorzugsweise ist für den Fahrer und den Beifahrer jeweils eine Leuchte vorgesehen.

Mit der erfindungsgemäßen Leuchtenanordnung ist ein direkter Einblick in die Lichtaustrittsfläche verhindert. Wenn die Leuchte als Leseleuchte für den Fahrer oder Beifahrer dient, ermöglicht die erfindungsgemäß positionierte Leuchtenanordnung außerdem eine homogene und helle Ausleuchtung der Leseebene.

Bei bevorzugten Ausführungsformen der Erfindung ist die mindestens eine Leuchte integrierter Bestandteil der den Rückspiegel und das Rückspiegelgehäuse umfassenden Rückspiegelvorrichtung und kann dazu beispielsweise im Befestigungsfuß des Rückspiegelgehäuses angeordnet sein. In diesen Befestigungsfuß können auch andere Komponenten, wie z.B. ein Regensensor, aufgenommen sein. Hier ist auch genügend Raum vorhanden, um ein effektives optisches System mit hoher Lichtleistung zu integrieren. Vorteilhafterweise ist am Befestigungsfuß für jede Leuchte ein in Richtung auf den Fahrer bzw. Beifahrer vorstehender Stutzen vorgesehen, in welchem die Lichtquelle der jeweiligen Leuchte hinter die Stutzenmündung zurückversetzt angeordnet ist. Je weiter die Lichtquelle zurückversetzt ist, desto weniger ist ein direkter Blick auf die Lichtquelle bzw. deren Lichtaustrittsfläche möglich.

Die oben genannte Aufgabe wird auch gelöst durch einen Rückspiegel für ein Kraftfahrzeug mit einem Befestigungsfuß, in welchem hinter dem Rückspiegelgehäuse des Rückspiegels mindestens eine Leuchte, insbesondere zwei Leuchten angeordnet sind. Bevorzugt ist am Befestigungsfuß für jede Leuchte ein in Richtung auf den Fahrer bzw. Beifahrer vorstehender Stutzen vorgesehen, in welchem die Lichtquelle der jeweiligen Leuchte hinter die Stutzenmündung zurückversetzt angeordnet ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

### Es zeigt:

- Fig. 1: eine erfindungsgemäße Leuchtenanordnung mit zwei hinter dem Rückspiegel angeordneten Leseleuchten für den Fahrer und den Beifahrer eines Kraftfahrzeugs in einer Ansicht von vorn; und
- Fig. 2: die erfindungsgemäße Leuchtenanordnung der Fig. 1 mit einem geschnitten dargestellten Befestigungsfuß des Rückspiegels.

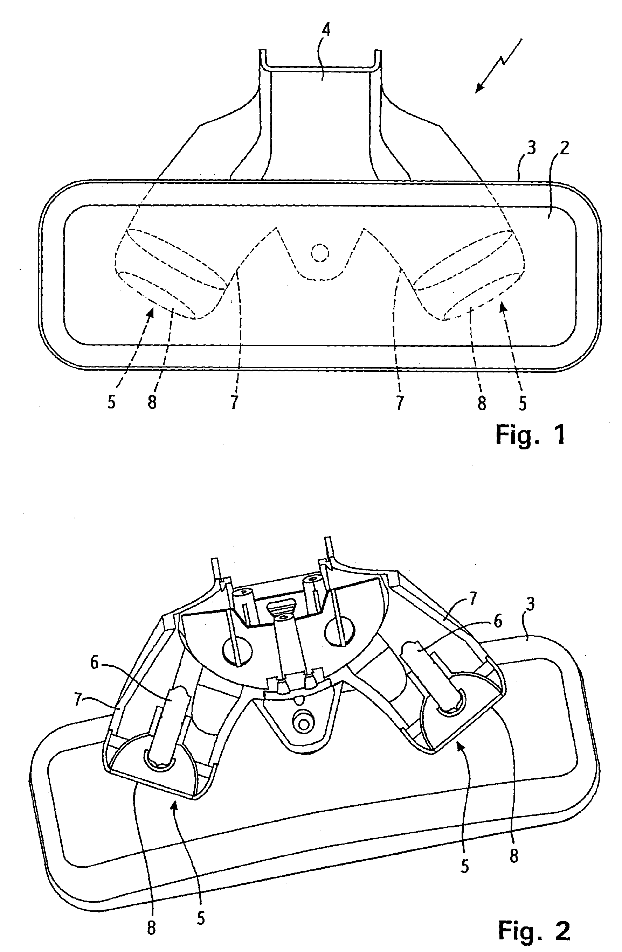

Die in **Fig. 1** insgesamt mit **1** bezeichnete Leuchtenanordnung dient als Lesebeleuchtung für den Fahrer und den Beifahrer eines Kraftfahrzeugs und ist hinter dem Rückspiegel **2** des Fahrers bzw. dem Rückspiegelgehäuse **3** vorgesehen. Das Rückspiegelgehäuse 3 ist mittels eines Befestigungsfußes **4** am Dachhimmel oder an der Windschutzscheibe des Kraftfahrzeugs befestigt.

Wie Fig. **2** zeigt, umfaßt die Leuchtenanordnung 1 zwei Leuchten **5**, deren Lichtquellen **6** jeweils in einem in Richtung auf den Fahrer bzw. Beifahrer vorstehenden Stutzen **7** des Befestigungsfußes 4 angeordnet sind, wobei die Lichtquellen 6 jeweils hinter die Stutzenmündung **8** zurückversetzt sind. Die durch die Stutzenmündung 8 gebildeten Lichtaustrittsflächen der Leuchten 5 sind durch den Rückspiegel 2 bzw. das Rückspiegelgehäuse 3 für den Fahrer und Beifahrer verdeckt, so daß ein direkter Blick in die Lichtquellen 6 und auf die Lichtaustrittsflächen für Fahrer und Beifahrer sicher verhindert ist.

Bei einer Leuchtenanordnung 1 für den Fahrer und/oder Beifahrer eines Kraftfahrzeugs ist die mindestens eine Leuchte 5 hinter dem Rückspiegel 2 des Fahrers so angeordnet, daß ihre Lichtaustrittsfläche durch den Rückspiegel 2 bzw. das Rückspiegelgehäuse 3 zumindest teilweise für den Fahrer und/ oder Beifahrer verdeckt ist.

## Patentansprüche

1. Leuchtenanordnung (1) für den Fahrer und/oder Beifahrer eines Kraftfahrzeugs, mit mindestens einer Leuchte (5),
**dadurch gekennzeichnet,**
**daß** die mindestens eine Leuchte (5) hinter dem Rückspiegelgehäuse (3) des Rückspiegels (2) des Fahrers angeordnet ist und ihre Lichtaustrittsfläche durch das Rückspiegelgehäuse (3) zumindest teilweise für den Fahrer und/oder Beifahrer verdeckt ist.

2. Leuchtenanordnung nach Anspruch 1, **dadurch gekennzeichnet, daß** für den Fahrer und den Beifahrer jeweils eine Leuchte (5) vorgesehen ist.

3. Leuchtenanordnung nach Anspruch 1 oder 2, **dadurch gekennzeichnet, daß** die mindestens eine Leuchte (5) integrierter Bestandteil der den Rückspiegel (2) und das Rückspiegelgehäuse (3) umfassenden Rückspiegelvorrichtung ist.

4. Leuchtenanordnung nach Anspruch 3, **dadurch gekennzeichnet, daß** die mindestens eine Leuchte (5) im Befestigungsfuß (4) des Rückspiegelgehäuses (3) angeordnet ist.

5. Leuchtenanordnung nach Anspruch 4, **dadurch gekennzeichnet, daß** am Befestigungsfuß (4) für jede Leuchte (5) ein in Richtung auf den Fahrer bzw. Beifahrer vorstehender Stutzen (7) vorgesehen ist, in welchem die Lichtquelle (6) der jeweiligen Leuchte (5) hinter die Stutzenmündung (8) zurückversetzt angeordnet ist.

6. Rückspiegel (2) für ein Kraftfahrzeug mit einem Befestigungsfuß (4), **dadurch gekennzeichnet, daß** hinter dem Rückspiegelgehäuse (3) des Rückspiegels (2) im Befestigungsfuß (4) mindestens eine Leuchte (5), insbesondere zwei Leuchten (5) angeordnet sind.

7. Rückspiegel nach Anspruch 6, **dadurch gekennzeichnet, daß** am Befestigungsfuß (4) für jede Leuchte (5) ein in Richtung auf den Fahrer bzw. Beifahrer vorstehender Stutzen (7) vorgesehen ist, in welchem die Lichtquelle (6) der jeweiligen Leuchte (5) hinter die Stutzenmündung (8) zurückversetzt angeordnet ist.
